(19) Europäisches Patentamt
European Patent Office
Office européen des brevets

(11) Veröffentlichungsnummer : **0 062 255**
**B1**

(12) # EUROPÄISCHE PATENTSCHRIFT

(45) Veröffentlichungstag der Patentschrift : **28.08.85**

(51) Int. Cl.[4] : **C 07 F 9/12**, C 07 F 9/18

(21) Anmeldenummer : **82102541.8**

(22) Anmeldetag : **26.03.82**

(54) **Herstellung alkylsulfinyl-substituierter Organophosphorsäureester.**

(30) Priorität : **06.04.81 JP 50536/81**

(43) Veröffentlichungstag der Anmeldung : **13.10.82 Patentblatt 82/41**

(45) Bekanntmachung des Hinweises auf die Patenterteilung : **28.08.85 Patentblatt 85/35**

(84) Benannte Vertragsstaaten : **BE CH DE FR GB IT LI NL**

(56) Entgegenhaltungen :
**DE-B- 1 101 406**
**FR-A- 2 420 526**
**GB-A- 778 759**
**JP-A-35 000 778**

(73) Patentinhaber : **NIHON TOKUSHU NOYAKU SEIZO K.K.**
**No.4, 2-chome, Nihonbashi Honcho Chuo-ku**
**Tokyo 103 (JP)**

(72) Erfinder : **Saito, Junichi**
**3-7-12, Osawa**
**Mitaka-shi Tokyo (JP)**
Erfinder : **Shiokawa, Kozo**
**210-6, Shukugawara Tama-ku**
**Kawasaki-shi Kanagawa-ken (JP)**
Erfinder : **Takemoto, Toshiyuki**
**50-3, 206, Matsugaya**
**Hachioji-shi Tokyo (JP)**

(74) Vertreter : **Schumacher, Günter, Dr. et al**
**c/o Bayer AG Konzernverwaltung RP Patentabteilung**
**D-5090 Leverkusen 1 Bayerwerk (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die vorliegende Erfindung betrifft ein verbessertes Verfahren, das die vorteilhafte Herstellung eines alkylsulfinyl-substituierten Phenylphosphorsäureesters aus einem alkylmercapto-substituierten Phenylphosphorsäureester ermöglicht, und zwar im technischen Maßstab, unter niedrigeren Produktionskosten, unter Sicherheitsbedingungen, in erheblich verbesserter Reinheit und in besseren Ausbeuten, wobei in günstiger Weise verschiedene Nachteile und Schwierigkeiten, die in der Praxis bei der technischen Herstellung auftreten, vermieden werden.

Es ist bekannt, einen als insektizide und akarizide Verbindung verwendbaren alkylsulfinyl-substituierten Phenyl-phosphorsäureester durch Umsetzung von Hydrogenperoxid mit einem alkylmercapto-substituierten Phenylphosphorsäureester herzustellen. Wegen verschiedener Probleme und Nachteile war es jedoch schwierig, die gewünschte Verbindung in vorteilhafter Weise mit hoher Reinheit und in hohen Ausbeuten mittels einer Verfahrensweise herzustellen, die für einen Einsatz im technischen Maßstab geeignet ist.

Beispielsweise offenbart die JP-PS 778/60 eine solche Reaktion unter Verwendung von Hydrogenperoxid in Essigsäure als Lösungsmittel. Es zeigte sich jedoch, daß ein Einsatz dieses Verfahrens im technischen Maßstab zahlreiche Probleme in bezug auf die Abtrennung der gewünschten Verbindung aus den Reaktionsprodukten aufwarf.

Nach der Literaturangabe umfaßt die Methode im Laboratoriumsmaßstab die Extraktion des gewünschten Produkts durch mehrmaliges Schütteln mit einem organischen Lösungsmittel und Wasser. Dieser Schritt wird in der Weise durchgeführt, daß die Reaktionsmischung in eine große Menge Wasser gegossen wird, wodurch ein gemischtes System aus Essigsäure als dem Lösungsmittel, einer großen Menge Wasser und den entstandenen Produkten gebildet wird, und daß danach das System mit einem organischen Lösungsmittel extrahiert wird, um das gesuchte Produkt abzutrennen und zu sammeln. Diese Verfahrensweise erfordert eine große Menge des organischen Lösungsmittels zur Abtrennung und Sammlung des angestrebten Produkts und bedingt die Behandlung einer großen Menge essigsäurehaltigen Abwassers. Weiterhin ist die Rückgewinnung der Essigsäure aus dem essigsäurehaltigen Abwasser technisch sehr nachteilig und schwierig und erfordert umfangreiche Einrichtungen zur Behandlung des Abwassers. Damit wirft ein solches Verfahren viele technische Probleme auf, die einer Übertragung in den technischen Maßstab entgegenstehen.

Im Zusammenhang mit diesem Verfahren schlug die obige Veröffentlichung eine andere Arbeitsweise im Laboratoriumsmaßstab vor, bei dem das aus Hydrogenperoxid und dem Reaktionsprodukt in einem Essigsäure-Lösungsmittel bestehende Reaktionssystem zur Rückgewinnung der Essigsäure unmittelbar als solches destilliert wird. Diese Verfahrensweise ist nur unter Schwierigkeiten sicher durchzuführen und birgt Explosionsgefahr in sich. Aus diesem Grunde ist eine solche Arbeitsweise für die praktische Durchführung im technischem Maßstab gänzlich ungeeignet.

Die JP-PS 778/60 offenbart auch eine Methode für die Reaktion mit Hydrogenperoxid in Methanol als Lösungsmittel unter durch Schwefelsäure hergestellten sauren Bedingungen. Es zeigte sich, daß diese Methode dahingehende Mängel besaß, daß bei ihrer Übertragung in den technischen Maßstab viele Schwierigkeiten in bezug auf die Abtrennung der Zielverbindung von den Reaktionsprodukten auftraten, und das Verfahren an sich ist bereits mühsam.

Die Durchführung dieser Reaktionsmethode im technischen Maßstab ist mit den vorgenannten Schwierigkeiten bei der Behandlung von methanolhaltigem Abwasser verbunden, und Rückgewinnung und Kreislauf des Methanols erfordern komplizierte und unvorteilhafte Schritte und kostspielige Destillationsanlagen.

Die erwähnte Veröffentlichung gibt als Reaktionstemperatur 40 °C bis 50 °C an. Ergänzende Untersuchungen der Anmelderin ergaben, daß die Reaktion langsam vonstatten geht und bis zum Erreichen eines vollständigen Umsatzes im technischen Maßstab eine ausgedehnte Reaktionszeit und eine Reaktionstemperatur von 40 °C bis 50 °C und in einigen Fällen von etwa 60 °C benötigt werden. Dadurch ergibt sich die Gefahr, daß anomale Reaktionen verursacht werden können. Aus diesem Grunde erwies sich das Verfahren für eine praktische Durchführung im technischen Maßstab als ungeeignet.

Seitens der Anmelderin wurden eingehende Untersuchungen zur Entwicklung eines Verfahrens durchgeführt, das für die Herstellung eines alkylsulfinylsubstituierten Phenylphosphorsäureesters aus einem alkylmercaptosubstituierten Phenylphosphorsäureester im technischen Maßstab geeignet ist.

Das konventionelle Verfahren besteht darin, daß Hydrogenperoxid mit einem alkylmercaptosubstituierten Phenylphosphorsäureester in stark polarem Methanol unter sauren Bedingungen unter Beteiligung einer geringen Menge Schwefelsäure oder in einem stark polaren Essigsäure-Lösungsmittel umgesetzt wird, wodurch mit Hilfe der oxydierenden Kraft der entstehenden organischen Persäure die Alkylmercapto-Gruppe oxidativ in eine Alkylsulfinyl-Gruppe umgewandelt wird. Die Untersuchungen der Anmelderin haben nunmehr ergeben, daß die vorerwähnten Nachteile oder Schwierigkeiten der konventionellen Verfahren in vorteilhafter Weise vermieden werden können, wenn diese Reaktion in einem aprotischen Lösungsmittel unter sauren Bedingungen unter Beteiligung einer geringen Menge Schwefelsäure in Gegenwart einer organischen Carbonsäure in einer für die Verwendung als Lösungsmittel nicht in Betracht kommenden Menge, nämlich einer deutlich herabgesetzten Menge von nur 1 mol

oder noch weniger auf 1 mol des Ausgangsesters, durchgeführt wird, und daß dadurch ein alkylsulfinylsubstituierter Phenylphosphorsäureester im technischen Maßstab und unter verschiedenen Verbesserungen hergestellt werden kann; diese Verbesserungen umfassen sehr hohe Reinheit und hohe Ausbeuten, vereinfachte Verfahrensweisen, niedrigere Kosten, hohe Sicherheit, gute qualitative Reproduzierbarkeit, beträchtlich herabgesetzte Mengen der zur Verwendung gelangenden organischen Carbonsäuren, niedrige Reaktionstemperaturen, eine abgekürzte Reaktionszeit sowie eine bessere Abwasserbehandlung.

Die vorliegende Erfindung betrifft im einzelnen ein Verfahren zur Herstellung eines alkylsulfinyl-substituierten Phosphorsäureesters der Formel

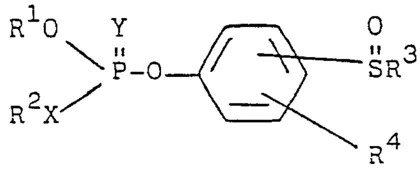

(1)

in der

$R^1$ und $R^2$ jeweils unabhängig voneinander für Alkyl, Halogenoalkyl, Alkenyl oder gegebenenfalls substituiertes Aryl,

$R^3$ für Alkyl,

$R^4$ für Wasserstoff, Halogen, Alkyl, Alkoxy, Nitro, Cyano, Alkoxycarbonyl, Phenyl oder Phenoxy und

X und Y jeweils unabhängig voneinander für Sauerstoff oder Schwefel

stehen, das dadurch gekennzeichnet ist, daß Hydrogenperoxid mit einem alkylmercapto-substituierten Phenylphosphorsäureester der Formel

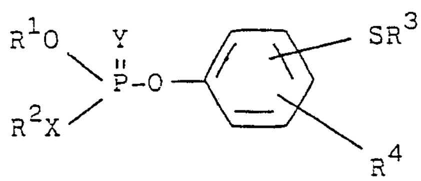

(2)

in einem aprotischen Lösungsmittel, welches im wesentlichen mit Wasser nicht mischbar ist, unter durch Schwefelsäure induzierten sauren Bedingungen in Gegenwart einer organischen Carbonsäure bei Temperaturen von 0 bis 25 °C umgesetzt wird, wobei auf 1 Mol der Verbindung der Formel (2) 0,01 bis 0,6 Mol Schwefelsäure und 0,05 bis 1 Mol organische Carbonsäure eingesetzt werden.

Versuche im größeren Maßstab haben gezeigt, daß, wenn die vorbeschriebene Reaktion mit Hydrogenperoxid in Methanol als Lösungsmittel unter durch Schwefelsäure induzierten sauren Bedingungen bei einer Reaktionstemperatur von etwa Raumtemperatur oder im Bereich von 40 °C bis 50 °C durchgeführt wird, die Ergebnisse hinsichtlich der Reinheit und der Ausbeute unbefriedigend sind, wie viele Vergleichsbeispiele und Synthesebeispiele im folgenden zeigen. Im Gegensatz hierzu wurde gefunden, daß das Verfahren gemäß der vorliegenden Erfindung das angestrebte Produkt bei einer niedrigen Reaktionstemperatur und nach einer abgekürzten Reaktionsdauer liefert, die beide technische Vorteile bieten.

Es ist demnach ein Ziel der vorliegenden Erfindung, ein verbessertes Verfahren verfügbar zu machen, das die Herstellung eines alkylsulfinyl-substituierten Phenylphosphorsäureesters aus einem alkylmercapto-substituierten Phenylphosphorsäureester in wirtschaflich günstiger Weise ermöglicht.

Dieses und viele andere Ziele und Vorteile der vorliegenden Erfindung werden aufgrund der folgenden Beschreibung deutlicher erkennbar.

Das Reaktionsschema des neuen Verfahrens kann wie folgt dargestellt werden:

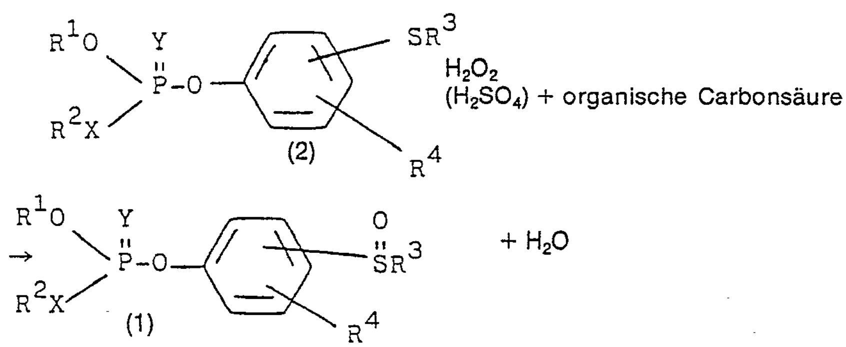

Beispiele für $R^1$ und $R^2$ umfassen $C_1$-bis $C_8$-, vorzugsweise $C_1$-bis $C_6$-Alkyl-Gruppen wie Methyl, Ethyl, n- (oder iso-) Amyl oder n-Hexyl ; deren Halogen-Substitutions-produkte, vorzugsweise von $C_1$- bis $C_6$-Alkyl-Gruppen, z. B. Chlor-, Brom-, Fluor- oder Iod-substituierte Alkyl-Gruppen ; $C_2$- bis $C_6$-, vorzugsweise $C_2$- bis $C_4$-Alkenyl-Gruppen wie Vinyl, Allyl oder Methallyl ; weitherhin $C_6$- und $C_{10}$-Aryl-Gruppen wie Phenyl und Naphthyl, die gegebenenfalls Substituenten besitzen, die aus der aus niederem $C_1$- bis $C_4$-Alkyl, Halogen-Atomen, niederem $C_1$- bis $C_4$-Alkoxy und Nitro bestehenden Gruppe ausgewählt wurden.

Beispiele für $R^3$ umfassen $C_1$- bis $C_4$-, vorzugsweise $C_1$- bis $C_2$- niedere Alkyl-Gruppen, wie sie z. B. oben bei $R^1$ und $R^2$ erläutert werden.

Beispiele für $R^4$ umfassen ein Wasserstoff-Atom, eine Nitro-Gruppe, eine Cyano-Gruppe, eine Phenoxy-Gruppe, eines der Halogen-Atome, wie sie bei den vorbeschriebenen Halogenoalkyl-Gruppen beispielhaft genannt wurden ; niedere $C_1$- bis $C_4$-, vorzugsweise niedere $C_1$- bis $C_2$-Alkyl-Gruppen, z. B. niedere Alkyl-Gruppen, wie sie oben bei $R^1$ und $R^2$ beispielhaft erläutert werden ; niedere $C_1$- bis $C_4$-Alkoxy-Gruppen wie Methoxy, Ethoxy, n-(oder iso-) Propoxy, n-(iso-, sec- oder tert-) Butoxy ; sowie niedere Alkoxycarbonyl-Gruppen mit den vorstehend genannten Alkoxy-Gruppen.

Beispiele für die Ausgangsverbindungen der Formel (2) sind : O,O-Dimethyl-O-(3-methyl-4-methylthio-phenyl)-thiophosphat, O,O-Diethyl-O-(3-methyl-4-methylthiophenyl) thiophosphat, O,O-Dimethyl-O-(4-methylthiophenyl)-thiophosphat, O,O-Diethyl-O-(4-methylthiophenyl)-thiophosphat und O-Ethyl-S-n-propyl-O-(4-methylthiophenyl)-phosphorodithioat.

Zu Beispielen für die Verbindungen der Formel (1) zählen O,O-Dimethyl-O-(3-methyl-4-methylsulfinyl-phenyl) thiophosphat, O,O-Diethyl-O-(3-methyl-4-methylsulfinylphenyl)-thiophosphat, O,O-Dimethyl-O-(4-methylsulfinylphenyl) thiophosphat, O,O-Diethyl-O-(4-methylsulfinylphenyl) thiophosphat und O-Ethyl-S-n-propyl-O-(4-methylsulfinylphenyl)-phosphorodithioat.

Die Reaktion wird in mindestens einem aprotischen organischen Lösungsmittel durchgeführt, das im wesentlichen nicht mischbar mit oder unlöslich in Wasser ist, vorzugsweise einem aus der aus Kohlenwasserstoffen, halogenierten Kohlenwasserstoffen, Ethern und Ketonen bestehenden Gruppe ausgewählten Lösungsmittel. Beispiele für solche aprotischen organischen Lösungsmittel sind aliphatische, alicyclische und aromatische (gegebenenfalls chlorierte) Kohlenwasserstoffe wie Hexan, Cyclohexan, Petrolether, Ligroin, Benzol, Toluol, Xylol, Methylenchlorid, Chloroform, Kohlenstofftetrachlorid, Ethylenchlorid und Trichloroethylen und Chlorbenzol ; Ether wie Diethylether, Methylethylether, Diisopropylether und Dibutylether ; sowie Ketone wie Methylisobutylketon. Diese Lösungsmittel können für sich allein oder als Gemische verwendet werden.

Bevorzugte Beispiele für erfindungsgemaß einzusekende organische Carbonsäuren sind organische Carbonsäuren, die aus der aus Ameisensäure, Essigsäure und Propionsäure, gegebenenfalls substituiert mit Halogen-Atomen, sowie Chlorobenzoesäure bestehenden Gruppe ausgewählt wurden. Beispiele für die Halogensubstituierten Säuren sind Monochloroessigsäure, Dichloroessigsäure und Trichloroessigsäure. Zu den Chlorobenzoesäuren gehört beispielsweise m-Chlorobenzoesäure.

Nach dem Verfahren gemäß der vorliegenden Erfindung wird die Reaktion der Verbindung der Formel (2) mit Hydrogenperoxid in dem beispielhaft genannten aprotischen Lösungsmittel unter durch Schwefelsäure induzierten sauren Bedingungen in Gegenwart der beispielhaft genannten organischen Carbonsäure durchgeführt. Die Menge der eingesetzten organischen Carbonsäure beträgt höchstens 1 mol auf 1 mol der Verbindung der Formel (2), kann jedoch beträchtlich niedriger sein. Erfindungsgemäß wird die organische Carbonsäure pro 1 mol der Verbindung der Formel (2) in einer Menge von 0,05 bis 1 mol, vorzugsweise von etwa 0,1 bis etwa 0,8 mol, eingesetzt. Die Menge der eingesetzten Schwefelsäure ist gering. Erfindungsgemäß beträgt sie auf 1 mol der Verbindung der Formel (2) 0,01 bis 0,6 mol, vorzugsweise etwa 0,04 bis etwa 0,5 mol.

Die Reaktionstemperatur liegt erfindungsgemäß in einem Bereich von 0 °C bis 25 °C, vorzugsweise von etwa 0 °C bis etwa 20 °C. Die Reaktionszeit kann passend gewählt werden ; sie kann beispielsweise von etwa 2 bis etwa 4 Stunden betragen.

Nach dem Verfahren gemäß der vorliegenden Erfindung können nach beendeter Reaktion die in hoher Reinheit anfallenden Verbindungen der Formel (1) in einfacher Weise aus der Reaktionsmischung abgetrennt und gewonnen werden, etwa auf die folgende Weise :

Da die Reaktion sich eines aprotischen Lösungsmittels bedient, scheiden sich die Reaktionsprodukte in eine organische Phase, die das gesuchte Produkt enthält, und eine wäßrige Phase. Zunächst wird die wäßrige Phase entfernt. Die verbleibende organische Phase wird mit der wässrigen Lösung eines basischen Alkalisalzes, z. B. Natrium- oder Kaliumhydroxid oder Natrium- oder Kaliumcarbonat, vorzugsweise Natrium- oder Kaliumhydroxid behandelt und mit Wasser gewaschen, und danach wird das Lösungsmittel durch Destillation entfernt, wodurch das gewünschte Produkt erhalten wird. Falls erwünscht kann eine Umkristallistion oder Destillation durchgeführt werd, um die Reinheit des Endprodukts weiter zu steigern. Die abgetrennte wäßrige Phase kann nach einem einfachen Arbeitsgang, etwa der Behandlung mit Salzsäure, dem Abwassersystem zugeführt werden, da ihr chemischer Sauerstoff-Bedarf (CSB) und ihre Gesamt-P-Konzentration beide jeweils sehr niedrig sind, wie die folgenden Beispiele zeigen.

Synthesebeispiele und Vergleichsbeispiele werden nachstehend angeführt, um die vorliegende Erfindung in bezug auf weitere Einzelheiten zu erläutern.

Synthese-Beispiel 1 (Verfahren der vorliegenden Erfindung)

9,7 kg (35 mol) O,O-Dimethyl-O-(3-methyl-4-methylthiophenyl) phosphorothioat wurden in 10 l Toluol gelöst, und 1,4 l (30 mol) Ameisensäure und 1,4 l 50-proz. Schwefelsäure wurden der Lösung zugesetzt. Unter Rühren und Kühlung wurden sodann im Laufe von 2 h tropfenweise 3,7 kg 35-proz. $H_2O_2$ (38,5 mol) hinzugegeben, so daß die Temperatur der Reaktionsmischung zwischen 0 °C und 10 °C gehalten wurde. Unmittelbar nach Beendigung der $H_2O_2$-Zugabe ergaben gaschromatographische Analysen, daß die Reaktion berteits zu 86,7 % vollständig abgelaufen war. Die Mischung wurde 2 h bei der gleichen Temperatur weiter gerührt, und dann wurde die wäßrige Phase aus der Reaktionsmischung abgetrennt. Die verbleibende organische Phase wurde mit 20-proz. NaOH neutralisiert, und der geringe $H_2O_2$-Überschuß wurde mit wäßriger Natriumthiosulfat-Lösung zersetzt, wonach die wäßrige Phase abgetrennt wurde. Die organische Phase wurde mit einer 1-proz. wäßrigen NaOH-Lösung und danach mit Wasser gewaschen. Das Toluol wurde durch Vakuum-Destillation entfernt, wonach 10,1 kg des gewünschten Produktes, des O,O-Dimethyl-O-(3-methyl-4-methylsulfinylphenyl) phosphorothioats, erhalten wurden. Gaschromatographische und flüssigkeitschromatographische Analysen zeigten, daß das Produkt eine Reinheit von 95,7 % besaß ; Schmp. 48 °C-50 °C ; Netto-Ausbeute 94,1 %.

Vergleichs-Beispiel 1

Das Verfahren nach Synthese-Beispiel 1 wurde durchgeführt, jedoch ohne den Einsatz der 50-proz. Schwefelsäure. Unmittelbar nach Beeindigung der $H_2O_2$-Zugabe war die Reaktion zu 37,4 % vollständig. Auch nach 16-stündigem Rühren bei der gleichen Temperatur war die Reaktion erst zu 51,6 % vollständig. Danach wurde die Reaktionsmischung 2 h auf 40 °C erhitzt. Nach entsprechender Aufarbeitung wurden 8,9 kg des gewünschten Produkts erhalten. Die Analysen zeigten, daß das Produkt eine Reinheit von 61,3 % besaß ; Netto-Ausbeute 53,3 %.

Vergleichs-Beispiel 2

Das Verfahren nach Synthese-Beispiel 1 wurde durchgeführt, jedoch ohne Einsatz der Ameisensäure. Unmittelbar nach Beendigung der $H_2O_2$-Zugabe war die Reaktion nur zu 5,3 % abgelaufen. Nach 16-stündigem Rühren bei der gleichen Temperatur war der Umsatz auf 21,3 % fortgeschritten. Danach wurde die Reaktionsmischung 2 h auf 40-50 °C erhitzt, jedoch auch danadh betrug der Umsatz nur 35,7 % (Ausbeute 8,8 kg), und der größte Teil des neben dem gewünschten Reaktionsprodukt vorliegenden Materials bestand aus dem unumgesetzten Ausgangsstoff.

Synthese-Beispiel 2 (Verfahren der vorliegenden Erfindung)

9,7 kg (35 mol) O,O-Dimethyl-O-(3-methyl-4-methylthiophenyl) phosphorothioat wurden in 10 l Chloroform gelöst. Zu der Lösung wurden 1,4 l (30 mol) Ameisensäure und 1,4 l 50-proz. Schwefelsäure hinzugefügt. Unter Rühren und Kühlung der Mischung wurden sodann im Laufe von 2 h 3,7 kg 35-proz. $H_2O_2$ (38,5 mol) tropfenweise hinzugegeben, so daß die Temperatur bei 0-10 °C gehalten wurde. Unmittelbar nach der Zugabe war die Reaktion zu 89,2 % vollständig. Die Reaktionsmischung wurde 1 h weiter bei der geichen Temperatur gerührt und dann üblicher Weise weiter behandelt, wonach das gewünschte Produkt in einer Ausbeute von 10,2 kg erhalten wurde. Dieses Produkt besaß eine Reinheit von 92,1 % ; Netto-Ausbeute 92,2 %.

Vergleichs-Beispiel 3 (Verfahren gemäß der Beschreibung der JP-PS 778/60)

10,2 kg (35 mol) O,O-Diethyl-O-(4-methylthiophenyl) phosphorothioat wurden in 28 l Essigsäure gelöst, und im Laufe von 2 h wurden 3,7 kg (38,5 mol) $H_2O_2$ bei 0-10 °C tropfenweise dazugegeben. Unmittelbar danach betrug der Umsatz 66,5 %. Nach 16 h Rühren bei der gleichen Temperatur betrug der Umsatz 82,4 %. Zur Isolierung des gewünschten Produkts aus der Reaktionsmischung wurden 10 l Toluol und etwa 80 l Wasser zugesetzt, und die Mischung wurde gründlich gerührt. Danach wurde die Toluol-Phase abgetrennt und mit einer verdünnten wäßrigen Alkali-Lösung gewaschen. Das Toluol wurde unter vermindertem Druck abdestilliert, wonach 8,8 kg des gewünschten Produkts erhalten wurden. Die Reinheit betrug 81,6 %; Netto-Ausbeute 69,8 %.

Vergleichs-Beispiel 4 (Verfahren gemäß der Beschreibung der JP-PS 778/60).

9,7 kg (35 mol) O,O-Dimethyl-O-(3-methyl-4-methylthiophenyl) phosphorothioat wurden in 20 l Methanol gelöst. Dieser Lösung wurden 0,15 l 50-proz. $H_2SO_4$ zugesetzt. Im Laufe von 2 h wurden, 3,7 kg 35-proz. $H_2O_2$ (38,5 mol) tropfenweise bei Raumtemperatur zu der Mischung hinzugefügt. Unmittelbar danach betrug der Umsatz 63,4 %. Nachdem die Mischung 8 h bei der gleichen Temperatur gerührt worden war, war der Umsatz auf 86,8 % angestiegen. Das Rühren wurde 1 h bei 40-50 °C fortgesetzt, um die Reaktion zu vervollständigen. Nach dem Abkühlen der Reaktionsmischung auf Raumtemperatur

wurden 10 l Chloroform und etwa 60 l Wasser zugesetzt, und die Mischung wurde gerührt. Die flüssigen Phasen wurden voneinander getrennt, und nach Aufarbeitung mittels üblicher Verfahren wurden 9,0 kg des gewünschten Produkts erhalten. Die Reinheit betrug 85,7 % ; Netto-Ausbeute 74,6 %.

Ähnliche Methoden wurden bei verschiedenen anderen Synthese-Beispielen und Vergleichs-Beispielen durchgeführt. Die Ergebnisse sind in Tabelle 1 angegeben.

(Siehe Tabelle 1, Seite 7 ff.)

Tabelle 1

| Beispiel | Ausgangsstoff | Produkt | Reaktions-Lösungsmittel und zugesetzte Säure (l) |
|---|---|---|---|
| Synthese-Beispiel 1 | 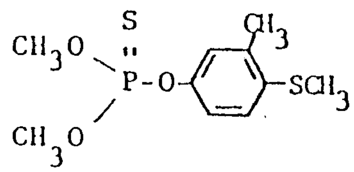<br>(I)<br>9,7 kg (35 mol) | 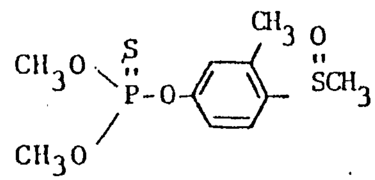<br>(I, S=O)<br>10,1 kg | Toluol 10 l<br>Ameisensäure 1,4 l<br>50-proz. Schwefelsäure 1,4 l |
| Vergleichs-Beispiel 1 (Kontrolle) | (I)<br>9,7 kg (35 mol) | (I, S=O)<br>8,9 kg | Toluol 10 l<br>Ameisensäure 1,4 l |
| Vergleichs-Beispiel 2 (Kontrolle) | (I)<br>9,7 kg (35 mol) | (I, S=O)<br>8,8 kg | Toluol 10 l<br>50-proz. Schwefelsäure 1,4 l |
| Synthese-Beispiel 2 | (I)<br>9,7 kg (35 mol) | (I, S=O)<br>10,2 kg | Chloroform 10 l<br>Ameisensäure 1,4 l<br>50-proz. Schwefelsäure 1,4 l |

Tabelle 1 (Fortsetzung)

| Beispiel | Ausgangsstoff | Produkt | Reaktionslösungsmittel und zugesetzte Säure (1) |
| --- | --- | --- | --- |
| Vergleichs-Beispiel 3 (Kontrolle *) | 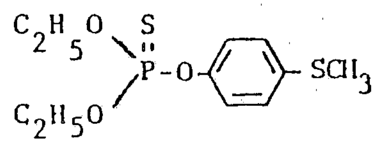<br>(II)<br>10,2 kg (35 mol) | 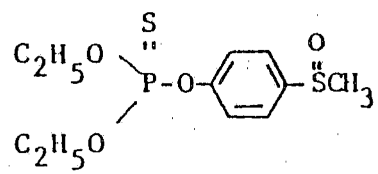<br>(II, S=O)<br>9,8 kg | Essigsäure 28 1 |
| Vergleichs-Beispiel 4 (Kontrolle **) | (I)<br>9,7 kg (35 mol) | (I, S=O)<br>9,0 kg | Methanol 20 1<br>50-proz. Schwefelsäure 0,15 1 |
| Synthese-Beispiel 3 | (I)<br>9,7 kg (35 mol) | (I, S=O)<br>10,1 kg | Toluol 15 1<br>Essigsäure 1,4 1<br>50-proz. Schwefelsäure 1,4 1 |
| Synthese-Beispiel 4 | (II)<br>10,2 kg (35 mol) | (II, S=O)<br>10,6 kg | Toluol 10 1<br>Ameisensäure 1,4 1<br>50-proz. Schwefelsäure 1,4 1 |

Tabelle 1 (Fortsetzung)

| Beispiel | Ausgangsstoff | Produkt | Reaktionslösungsmittel und zugesetzte Säure (l) |
|---|---|---|---|
| Synthese-Beispiel 5 | 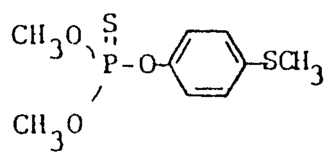 (III) 9,2 kg (35 mol) | 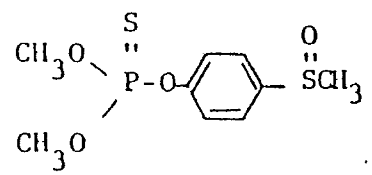 (III, S=O) 9,7 kg | Methylisobutylketon 10 l<br>Ameisensäure 1,4 l<br>50-proz. Schwefelsäure 1,4 l |
| Vergleichs-Beispiel 5 (Kontrolle) | (III) 9,2 kg (35 mol) | (III, S=O) 9,0 kg | Methanol 15 l<br>50-proz. Schwefelsäure 0,15 l |
| Vergleichs-Beispiel 6 (Kontrolle) | (III) 9,2 kg (35 mol) | (III, S=O) 8,8 kg | Methanol 15 l<br>50-proz. Schwefelsäure 0,15 l |
| Vergleichs-Beispiel 7 (Kontrolle) | (III) 9,2 kg (35 mol) | (III, S=O) 8,2 kg | Methanol 15 l<br>50-proz. Schwefelsäure 0,15 l |

Tabelle 1 (Fortsetzung)

| Beispiel | Ausgangsstoff | Produkt | Reaktionslösungsmittel und zugesetzte Säure (l) |
|---|---|---|---|
| Synthese-Beispiel 6 | 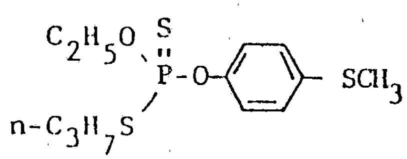<br>(IV)<br>11,3 kg (35 mol) | 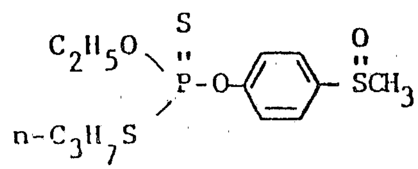<br>(IV, S=O)<br>11,7 kg | Toluol 10 l<br>Ameisensäure 0,7 l<br>50-proz. Schwefelsäure 0,7 l |
| Synthese-Beispiel 7 | (I)<br>9,7 kg (35 mol) | (I, S=O)<br>10,2 kg | Toluol 10 l<br>Propionsäure 1,4 l<br>50-proz. Schwefelsäure 1,4 l |
| Synthese-Beispiel 8 | (I)<br>9,7 kg (35 mol) | (I, S=O)<br>10,1 kg | Toluol 10 l<br>Ameisensäure 0,35 l<br>50-proz. Schwefelsäure 1,4 l |
| Synthese-Beispiel 9 | (I)<br>9,7 kg (35 mol) | (I, S=O)<br>10,3 kg | Methylisobutylketon 10 l<br>Essigsäure 0,21 l<br>50-proz. Schwefelsäure 1,75 l |

Tabelle 1 (Fortsetzung)

| Beispiel | Ausgangsstoff | Produkt | Reaktionslösungsmittel und zugesetzte Säure (l) |
|---|---|---|---|
| Synthese-Beispiel 10 | (I)<br>9,7 kg (35 mol) | (I, S=O)<br>10,1 kg | Chloroform 10 l<br>Trichloro-essigsäure 0,82 kg<br>50-proz. Schwefelsäure 0,5 l |
| Synthese-Beispiel 11 | 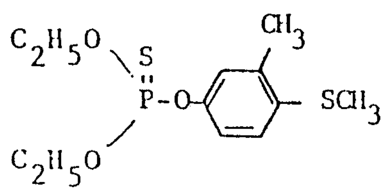<br>(V)<br>10,7 kg (35 mol) | 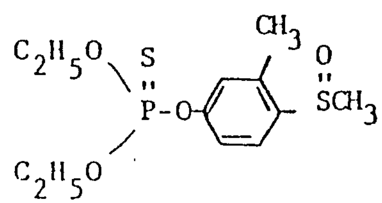<br>(V, S=O)<br>11,2 kg | Toluol 10 l<br>Ameisensäure 0,92 l<br>50-proz. Schwefelsäure 0,92 l |

Anmerkung : Vergleichsbeispiel 3 (Kontrolle*) und Vergleichsbeispiel 4 (Kontrolle**) zeigen die Ergebnisse, die nach der in der JP-PS 778/60 beschriebenen Methode beim Arbeiten in größerem Maßstab erhalten wurden.

Tabelle 1 (Fortsetzung)

| Beispiel | $H_2O_2$ Menge (kg) | Reaktionstemperatur und Reaktionszeit (°C - °C) | (h) | Ausbeute (%) | Reinheit (%) | Netto-Ausbeute (%) | Eigenschaften und anderes |
|---|---|---|---|---|---|---|---|
| Synthese-Beispiel 1 | 3,7 (38,5 mol) | 0 - 10 | 4 | 98,3 | 95,7 | 94,1 | Schmp. 48-50°C |
| Vergleichs-Beispiel 1 (Kontrolle) | 3,7 | 10 - 20<br>dann 40 | 16<br>2 | 87,0 | 61,3 | 53,3 | zurückgewonnenes Ausgangsmaterial: 36 % |
| Vergleichs-Beispiel 2 (Kontrolle) | 3,7 | 10 - 20<br>dann 40 | 16<br>2 | 85,0 | 35,6 | 30,3 | zurückgewonnenes Ausgangsmaterial: 60 % |
| Synthese-Beispiel 2 | 3,7 | 0 - 10 | 3 | 99,0 | 93,1 | 92,2 | |
| Vergleichs-Beispiel 3 (Kontrolle *) | 3,7 | 0 - 10 | 16 | 85,5 | 81,6 | 69,0 | |

Tabelle 1 (Fortsetzung)

| Beispiel | $H_2O_2$ Menge (kg) | Reaktionstemperatur und Reaktionszeit (°C - °C) | (h) | Aus-beute (%) | Rein-heit (%) | Netto-Aus-beute (%) | Eigenschaften und anderes |
|---|---|---|---|---|---|---|---|
| Vergleichs-Beispiel 4 (Kontrolle **) | 3,7 | Raumtemperat dann 40 - 50 | 10 1 | 87,0 | 85,7 | 74,6 | |
| Synthese-Beispiel 3 | 3,7 | 10 - 20 | 4 | 97,8 | 93,7 | 91,6 | |
| Synthese-Beispiel 4 | 3,7 | 0 - 10 | 3 | 98,5 | 93,8 | 92,4 | Sdp. 140-141 °C/ 0,0133 mbar |
| Synthese-Beispiel 5 | 3,7 | 0 - 10 | 3 | 98,8 | 94,1 | 93,0 | $n_D^{20}$ = 1,5648 |
| Vergleichs-Beispiel 5 (Kontrolle) | 3,7 | Raumtemperat. | 3 | 91,8 | 56,2 | 51,6 | Zurückgewonnenes Ausgangsmaterial: 48 % |

Tabelle 1 (Fortsetzung)

| Beispiel | $H_2O_2$ Menge (kg) | Reaktionstemperatur und Reaktionszeit (°C - °C) | (h) | Ausbeute (%) | Reinheit (%) | Netto-Ausbeute (%) | Eigenschaften und anderes |
|---|---|---|---|---|---|---|---|
| Vergleichs-Beispiel 6 (Kontrolle) | 3,7 | Raumtemperat. | 24 | 90,2 | 72,4 | 65,3 | |
| Vergleichs-Beispiel 7 (Kontrolle) | 3,7 | 40 - 50 | 5 | 83,6 | 78,0 | 65,2 | |
| Synthese-Beispiel 6 | 3,7 | 10 - 20 | 4 | 98,8 | 94,3 | 93,2 | $n_D^{20}$ = 1,5820 |
| Synthese-Beispiel 7 | 3,7 | 5 - 10 | 3 | 99,1 | 92,8 | 92,0 | |
| Synthese-Beispiel 8 | 3,7 | 10 - 20 | 4 | 98,5 | 93,2 | 91,8 | |

Tabelle 1 (Fortsetzung)

| Beispiel | $H_2O_2$ Menge (kg) | Reaktionstemperatur und Reaktionszeit (°C - °C) | (h) | Ausbeute (%) | Reinheit (%) | Netto-Ausbeute (%) | Eigenschaften und anderes |
|---|---|---|---|---|---|---|---|
| Synthese-Beispiel 9 | 3,7 | 10 - 20 | 4 | 100 | 92,1 | 92,1 | |
| Synthese-Beispiel 10 | 3,7 | 5 - 10 | 4 | 98,5 | 94,1 | 92,7 | |
| Synthese-Beispiel 11 | 3,7 | 5 - 10 | 4 | 99,0 | 94,5 | 93,6 | $n_D^{20}$ = 1,5467 |

Danach wurden die Einflüsse auf das Abwasser untersucht und dabei die nachstehenden Ergebnisse erhalten. Die Werte für den chemischen Sauerstoffbedarf (CSB, orig. COD) wurden gemäß der japanischen Industrienorm JIS Standard K-0102 bestimmt.

Tabelle 2

| Beispiel | Menge des Abwassers | CSB Mn | CSB-Belastung /kg Produkt | Gesamt-P-Konzentration |
|---|---|---|---|---|
| | l | ppm | g | ppm |
| Synthese-Beispiel 1 | 43 | 1 700 | 7,5 | 230 |
| Synthese-Beispiel 2 | 43 | 1 620 | 7 | 245 |
| Synthese-Beispiel 3 | 42 | 1 520 | 7 | 264 |
| Vergleichs-Beispiel 3 (Kontrolle *) | 120 | 10 000 | 150 | 1 500 |
| Vergleichs-Beispiel 4 (Kontrolle **) | 100 | 100 000 | 1 300 | 2 640 |
| Vergleichs-Beispiel 6 (Kontrolle) | 95 | 78 950 | 750 | 3 700 |

Die vorstehende Tabelle zeigt auch, daß sowohl die CSB-Werte als auch die Gesamt-P-Konzentrationen nach dem neuen Verfahren sehr niedrig sind und daß durch einfache Methoden der Abwasser-Behandlung die Einflüsse auf die Umwelt auf ein Mindestmaß gesenkt werden können.

**Patentansprüche**

1. Verfahren zur Herstellung eines alkylsulfinyl-substituierten Phenylphosphorsäureesters der Formel (1)

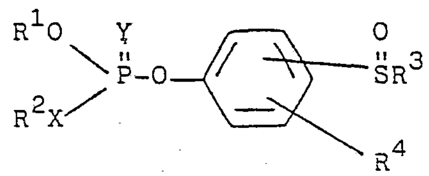

(1)

in der

$R^1$ und $R^2$ jeweils unabhängig voneinander für Alkyl, Halogenoalkyl, Alkenyl oder gegebenenfalls substituiertes Aryl,

$R^3$ für Alkyl,

$R^4$ für Wasserstoff, Halogen, Alkyl, Alkoxy, Nitro, Cyano, eine Alkoxycarbonyl-Gruppe, Phenyl oder Phenoxy und

X und Y jeweils unabhängig voneinander für Sauerstoff oder Schwefel

stehen, dadurch gekennzeichnet, daß Hydrogenperoxid mit einem alkylmercapto-substituiertem Phenylphosphorsäureester der Formel (2)

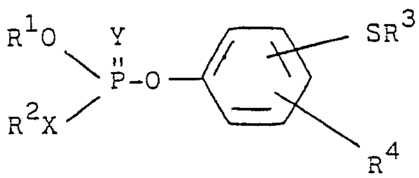

(2)

in einem aprotischen Lösungsmittel, welches im wesentlichen mit Wasser nicht mischbar ist, unter durch Schwefelsäure erzeugten sauren Bedingungen in Gegenwart einer organischen Carbonsäure bei Temperaturen von 0 bis 25 °C umgesetzt wird, wobei auf 1 Mol der Verbindung der Formel (2) 0,01 bis 0,6 Mol Schwefelsäure und 0,05 bis 1 Mol organische Carbonsäure eingesetzt werden.

2. Verfahren nach Anspruch 1, dadurch gekennzeichnet, daß als organische Carbonsäure eine aus der aus Ameisensäure, Essigsäure, Propionsäure und deren Halogen-Substitutionsprodukten bestehenden Gruppe ausgewählte organische Carbonsäure verwendet wird.

3. Verfahren nach Anspruch 1, dadurch gekennzeichnet, daß als aprotisches Lösungsmittel mindestens eines aus der aus Kohlenwasserstoffen, halogenierten Kohlenwasserstoffen, Ethern und Ketonen bestehenden Gruppe verwendet wird.

4. Verfahren nach Anspruch 1, dadurch gekennzeichnet, daß

$R^1$ und R2 jeweils unabhängig voneinander für $C_{1-8}$-Alkyl, $C_{1-6}$-Halogenoalkyl, $C_{2-4}$-Alkenyl, Halogen, oder gegebenenfalls durch $C_{1-4}$-Alkyl, Halogen, Nitro oder $C_{1-4}$-Alkoxy substituiertes Phenyl und

$R_3$ für $C_{1-4}$-Alkyl und

$R_4$ für Wasserstoff, Halogen, $C_{1-4}$-Alkyl, $C_{1-4}$-Alkoxy, Nitro, Cyano, $C_{1-4}$-Alkoxycarbonyl oder Phenoxy stehen.

5. Verfahren nach Anspruch 4, dadurch gekennzeichnet, daß als organisches Carbonsäure eine aus der aus Ameisensäure, Essigsäure, Propionsäure und deren Halogen-Substitutionsprodukten bestehenden Gruppe ausgewählte organische Carbonsäure in einer Menge von etwa 0,1 bis 0,8 mol auf jeweils 1 mol des alkylmercapto-substituierten Phenylphosphorsäureesters eingesetzt wird und daß als aprotisches Lösungsmittel mindestens eines aus der aus Kohlenwasserstoffen, halogenierten Kohlenwasserstoffen, Ethern und Ketonen bestehenden Gruppe verwendet wird.

## Claims

1. Process for the preparation of an alkylsulphinyl-substituted phenylphosphoric acid ester of the formula (1)

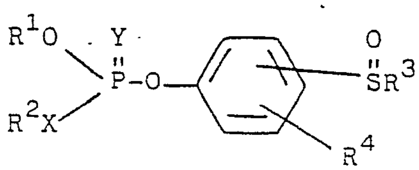

(1)

in which

$R^1$ and $R^2$ each independently represents alkyl, halogenoalkyl, alkenyl or optionally substituted aryl,

$R^3$ represents alkyl,

$R^4$ represents hydrogen, halogen, alkyl, alkoxy, nitro, cyano, an alkoxycarbonyl group, phenyl or phenoxy and

X and Y each independently represents oxygen or sulphur,

characterised in that hydrogen peroxide is reacted with an alkylmercapto-substituted phenylphosphoric acid ester of the formula (2)

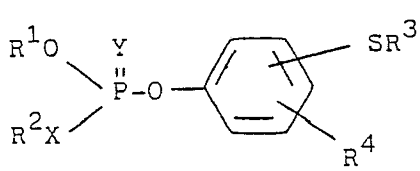

(2)

in an aprotic solvent which is substantially water-immiscible, under acidic conditions induced by sulphuric acid and in the presence of an organic carboxylic acid at temperatures of 0 to 25 °C, 0.01 to 0.6 mol of sulphuric acid and 0.05 to 1 mol of organic carboxylic acid being used per mol of the compound of the formula (2).

2. Process according to Claim 1, characterised in that an organic carboxylic acid selected from the group consisting of formic acid, acetic acid, propionic acid and halogen substitution products thereof is used as the organic carboxylic acid.

3. Process according to Claim 1, characterised in that the aprotic solvent used is at least one from the group consisting of hydrocarbons, halogenated hydrocarbons, ethers and ketones.

4. Process according to Claim 1, characterised in that

$R^1$ and $R^2$ each independently represent $C_{1-8}$-alkyl, $C_{1-6}$-halogenoalkyl, $C_{2-4}$-alkenyl, halogen or phenyl which is optionally substituted by $C_{1-4}$-alkyl, halogen, nitro or $C_{1-4}$-alkoxy and

$R^3$ represents $C_{1-4}$-alkyl and

$R^4$ represents hydrogen, halogen, $C_{1-4}$-alkyl, $C_{1-4}$-alkoxy, nitro, cyano, $C_{1-4}$-alkoxycarbonyl or phenoxy.

5. Process according to Claim 4, characterised in that an organic carboxylic acid selected from the group consisting of formic acid, acetic acid, propionic acid and halogen substitution products thereof, is used as the organic carboxylic acid, in an amount of about 0.1 to 0.8 mol per mol of the alkylmercapto-substituted phenylphosphoric acid ester and in that the aprotic solvent used is at least one from the group consisting of hydrocarbons, halogenated hydrocarbons, ethers and ketones.

**Revendications**

1. Procédé de préparation d'un ester d'acide phényl-phosphorique substitué par un groupe alkylsulfinyle et répondant à la formule :

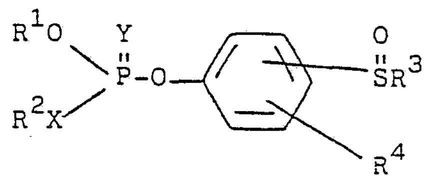

(1)

dans laquelle

$R^1$ et $R^2$ représentent chacun indépendamment l'un de l'autre un groupe alkyle, un groupe halogénoalkyle, un groupe alcényle ou un groupe aryle éventuellement substitué,

$R^3$ représente un groupe alkyle,

$R^4$ représente un atome d'hydrogène, un atome d'halogène, un groupe alkyle, un groupe alcoxy, un groupe nitro, un groupe cyano, un groupe alcoxy-carbonyle, un groupe phényle ou un groupe phénoxy, et

X et Y représentent chacun indépendamment l'un de l'autre un atome d'oxygène ou un atome de soufre,

caractérisé en ce qu'on fait réagir du peroxyde d'hydrogène avec un ester d'acide phényl-phosphorique substitué par un groupe alkyl-mercapto et répondant à la formule :

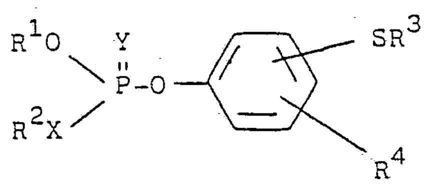

(2)

dans un solvant aprotique qui est essentiellement non miscible à l'eau, dans des conditions acides établies par l'acide sulfurique, en présence d'un acide carboxylique organique, à des températures de 0 à 25 °C, en utilisant, pour 1 mole du composé de formule (2), 0,01 à 0,6 mole d'acide sulfurique et 0,05 à 1 mole d'acide carboxylique organique.

2. Procédé selon la revendication 1, caractérisé en ce que, comme acide carboxylique organique, on utilise un acide carboxylique organique choisi parmi le groupe comprenant l'acide formique, l'acide acétique, l'acide propionique et leurs produits de substitution par des atomes d'halogènes.

3. Procédé selon la revendication 1, caractérisé en ce que, comme solvant aprotique, on utilise au moins un solvant choisi parmi le groupe comprenant les hydrocarbures, les hydrocarbures halogénés, les éthers et les cétones.

4. Procédé selon la revendication 1, caractérisé en ce que

$R^1$ et $R^2$ représentent chacun indépendamment l'un de l'autre un groupe alkyle en $C_1$-$C_8$, un groupe halogéno-alkyle en $C_1$-$C_6$, un groupe alcényle en $C_2$-$C_4$, un atome d'halogène ou un groupe phényle éventuellement substitué par un groupe alkyle en $C_1$-$C_4$, par un atome d'halogène, par un groupe nitro ou par un groupe alcoxy en $C_1$-$C_4$,

$R^3$ représente un groupe alkyle en $C_1$-$C_4$ et

$R^4$ représente un atome d'hydrogène, un atome d'halogène, un groupe alkyle en $C_1$-$C_4$, un groupe alcoxy en $C_1$-$C_4$, un groupe nitro, un groupe cyano, un groupe alcoxy (en $C_1$-$C_4$) carbonyle ou un groupe phénoxy.

5. Procédé selon la revendication 4, caractérisé en ce que, comme acide carboxylique organique, on utilise un acide carboxylique organique choisi parmi le groupe comprenant l'acide formique, l'acide acétique, l'acide propionique et leurs produits de substitution par des atomes d'halogènes, en une quantité d'environ 0,1 à 0,8 mole pour 1 mole de l'ester d'acide phényl-phosphorique substitué par un groupe alkyl-mercapto tandis que, comme solvant aprotique, on utilise au moins un solvant choisi parmi le groupe comprenant les hydrocarbures, les hydrocarbures halogénés, les éthers et les cétones.